# EUROPÄISCHE PATENTSCHRIFT

(11) **EP 3 409 156 B1**
(45) Veröffentlichungstag und Bekanntmachung des Hinweises auf die Patenterteilung: **30.08.2023**
(21) Anmeldenummer: 18000478.0
(22) Anmeldetag: 28.05.2018
(51) Int. Cl.: A47K 1/00, A47C 17/84, A47B 51/00

(54) **MÖBELVORRICHTUNG MIT EINEM HÖHENVERSTELLBAREN MÖBELELEMENT**
FURNITURE DEVICE WITH A HEIGHT ADJUSTABLE FURNITURE ELEMENT
DISPOSITIF DE MEUBLE POURVU D'UN ÉLÉMENT DE MEUBLE RÉGLABLE EN HAUTEUR

(30) Priorität: 30.05.2017 DE 202017103228 U
(43) Veröffentlichungstag der Anmeldung: 05.12.2018
(73) Patentinhaber: ATO FORM GmbH, 63877 Sailauf (DE)
(72) Erfinder: Kilburn, Joshua, 63796 Kahl am Main (DE)
(74) Vertreter: Gleim, Christian Ragnar

(56) Entgegenhaltungen:
- WO-A1-00/40123
- WO-A1-2006/055005
- DE-A1-102009 016 777
- DE-U1-202014 008 269
- FR-A1- 2 882 635
- JP-U- S63 120 961
- US-B2- 9 572 427

## Beschreibung

Die Erfindung betrifft eine Möbelvorrichtung mit einem höhenverstellbaren Möbelelement gemäß dem unabhängigen Anspruch.

Als Möbelvorrichtung versteht man jede Vorrichtung zum Montieren eines Möbelteils in einer bestimmten Position. Möbelvorrichtungen mit einem höhenverstellbaren Möbelelement erlauben eine Änderung der eingestellten Höhe des Möbelelements.

Es sind bereits Möbelvorrichtungen mit einem höhenverstellbaren Möbelelement bekannt, die im Bereich von Pflegemöbeln eingesetzt werden. Diese konventionellen Möbelvorrichtungen umfassen mindestens zwei Führungsstützen, ein an den vertikalen Führungsstützen angeordnetes Hubelement und ein Möbelteil, welches Möbelteil über an dem Hubelement angeordnete Montageelemente an den vertikalen Führungsstützen beweglich angeordnet ist. Das Möbelteil kann so durch die Übertragung einer Hubkraft durch das Hubelement über einen bestimmten Hub bewegt werden. Das Hubelement der Möbelvorrichtung aus dem Stand der Technik ist dabei ein Linearmotor mit einem hydraulischen oder pneumatischen Zylinder.

Für das Einstellen einer bestimmten Position (z.B. Höhe) des Möbelteils durch die Möbelvorrichtung wird der hydraulische oder pneumatische Zylinder in seiner Länge geändert. Die Möglichkeit des Einstellens der bestimmten Position ist durch den Hub des Zylinders begrenzt. Insbesondere ist die tiefste einstellbare Position durch die Höhe des Zylinders bei eingefahrenem Zustand begrenzt.

Aus FR 2 882 635 A1 ist eine Möbelvorrichtung mit einem höhenverstellbaren Möbelelement bekannt.

Die Aufgabe der Erfindung besteht nun darin, eine Möbelvorrichtung mit einem höhenverstellbaren Möbelelement bereitzustellen, mit welcher die Nachteile aus dem Stand der Technik überwunden werden, und insbesondere bei der der Hub des Möbelelements nicht durch einen Zylinder limitiert ist.

Diese Aufgabe wird durch eine Möbelvorrichtung gemäß Anspruch 1 gelöst.

Die Erfindung umfasst eine Möbelvorrichtung mit einem höhenverstellbaren Möbelelement, umfassend einen Rohrmotor und ein an dem Rohrmotor verstellbar angeordnetes Zugelement. Die Möbelvorrichtung umfasst ferner ein Möbelelement, das durch die Übertragung einer Zugkraft des Rohrmotors auf das Zugelement über einen vorbestimmten Hub bewegt werden kann. Aufgrund des Rohrmotors zur Betätigung des Zugelements ist der Hub des Möbelelements nicht limitiert. Der Rohrmotor ist in eine Welle eingeschoben und treibt diese an, wobei die Welle wiederum mit dem Zugelement vorzugsweise über die gesamte Länge verbunden ist. Nach einem bevorzugten Aspekt der Möbelvorrichtung, ist das Möbelelement an dem Zugelement relativ zu diesem verschiebbar angeordnet. Zum Beispiel ein brettartiger Badewannensitz kann über Rollen an dem Zugelement relativ zu diesem angeordnet sein. Dabei ist der Rohrmotor auf einer Seite der Badewanne angeordnet und das Zugelement auf der gegenüberliegenden Seite befestigt.

Erfindungsgemäß umfasst die Möbelvorrichtung ferner mindestens zwei vertikale Führungsstützen. Dabei ist das Möbelelement an den vertikalen Führungsstützen verschiebbar angeordnet. Damit kann ein Möbelelement vertikal geführt bewegt werden, um dieses höhenverstellbar zu gestalten.

Gemäß einem bevorzugten Aspekt ist der Rohrmotor mit zwei der mindestens zwei vertikalen Führungsstützen verbunden. Aufgrund der Verbindung mit den beiden Führungsstützen wird eine gute Haltekraft gewährleistet.

Ferner bevorzugt sind bei der Möbelvorrichtung zwei der mindestens zwei vertikalen Führungsstützen gleich lang ausgebildet und der Rohrmotor ist an einem jeweiligen Ende der beiden gleich langen vertikalen Führungsstützen angeordnet. So lässt sich eine Möbelvorrichtung mit zwei, an einer Wand befestigten, Führungsstützen herstellen, bei der die Führungsstützen am Boden stehend ausgebildet sind und der Rohrmotor am oberen Ende horizontal angeordnet ist. Das hat den Vorteil, dass die auftretenden Kräfte von den Führungsstützen über den Boden abgeleitet werden und gleichzeitig der Hub für das Möbelelement sich über die gesamte Länge der Führungsstützen erstreckt.

Erfindungsgemäß ist die Möbelvorrichtung, bei der die vertikalen Führungsstützen rohrförmig ausgebildet sind. Der Querschnitt der rohrförmig ausgebildeten Führungsstützen ist bei einer besonders bevorzugten Ausführungsform kreisförmig ausgebildet, was eine stabile Bauweise der Möbelvorrichtung ermöglicht.

Erfindungsgemäß umfasst die Möbelvorrichtung ferner Führungselemente, die derart rohrförmig ausgebildet sind, um die Führungsstützen zumindest abschnittsweise zu umschließen. Dazu sind an den Führungselementen Anlageflächen für den Kontakt mit der Führungsstütze ausgebildet, die bei einer Bewegung des Möbelelements an der Führungsstütze entlanggleiten. Die Anlagefläche kann an einer Führungsrolle angeordnet sein.

Erfindungsgemäß ist die Möbelvorrichtung mit zwei vertikalen Führungsstützen, wobei das Möbelelement eine Liegefläche oder eine Sanitäreinrichtung, insbesondere ein Waschbecken, ein Medizinschrank, ein Duschsitz, ein Bidet oder eine Toilette, ist. So lässt sich ein Pflegemöbel mit den Vorteilen der Erfindung realisieren.

Weiterhin vorteilhaft ist eine Möbelvorrichtung mit vier vertikalen Führungsstützen. Dabei ist das Möbelelement ein Rahmen für eine Liegefläche. Bei der Ausgestaltung des Möbelelements als ein Rahmen können die vier vertikalen Führungsstützen an zwei verschiedenen Seiten angeordnet sein, wodurch die auftretenden Kräfte an verschiedenen Seiten abgeleitet werden können. Besonders vorteilhaft ist, wenn jeweils zwei Führungsstützen an gegenüberliegenden Seiten angeordnet sind. Bevorzugt ist die Möbelvorrichtung, wobei der Rahmen an zumindest einer Rahmenseite einen weiteren Rohrmotor umfasst. Zum Beispiel bei der Anordnung von zwei Rohrmotoren an gegenüberliegenden Seiten eines Betts lassen sich die Seiten unabhängig voneinander in der Höhe positionieren.

Erfindungsgemäß ist das Zugelement flächig ausgebildet. Das Zugelement hat dabei bevorzugt die Breite des Möbelelements, um die auftretenden Kräfte zu verteilen.

Im Folgenden wird die Erfindung anhand der in den beigefügten Zeichnungen dargestellten Beispiele näher erläutert.

Es zeigen:
- Fig. 1: eine perspektivische Darstellung einer ersten Ausführung der Möbelvorrichtung mit einem höhenverstellbaren Möbelelement; und
- Fig. 2: eine perspektivische Darstellung einer zweiten Ausführung der Möbelvorrichtung mit einem höhenverstellbaren Möbelelement, wobei das Möbelelement ein Rahmen für eine Liegefläche ist; und
- Fig. 3: eine perspektivische Darstellung der zweiten Ausführung der Möbelvorrichtung, wobei der Rahmen für eine Liegefläche sich in abgesenkter Position befindet; und
- Fig. 4: eine weitere schematische Darstellung einer nicht erfindungsgemäßen Ausführung
der Möbelvorrichtung mit einem höhenverstellbaren Möbelelement, wobei das Möbelelement ein Halter für ein Fernsehgerät ist.

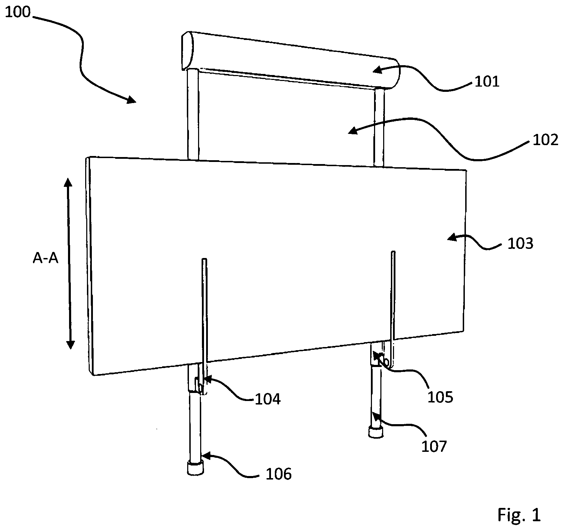

In **Fig. 1** ist eine perspektivische Darstellung einer ersten Ausführung der Möbelvorrichtung mit einem höhenverstellbaren Möbelelement gezeigt. Die Möbelvorrichtung umfasst einen Rohrmotor 101 und ein, an dem Rohrmotor 101 verstellbar angeordnetes, Zugelement 102. Dabei umfasst die Möbelvorrichtung 100 ferner ein Möbelelement 103. Durch die Übertragung einer Zugkraft des Rohrmotors 101 auf das Zugelement 102 kann das Möbelelement 103 über einen vorbestimmten Hub A-A bewegt werden.

Ferner umfasst die Möbelvorrichtung mindestens zwei vertikale Führungsstützen 106 und 107, wobei das Möbelelement 103 an den vertikalen Führungsstützen 106 und 107 verschiebbar angeordnet ist.

Der Rohrmotor 101 ist mit zwei der mindestens zwei vertikalen Führungsstützen 106 und 107 verbunden.

Vorteilhaft ist es, wenn zwei der mindestens zwei vertikalen Führungsstützen 106 und 107 gleich lang ausgebildet sind und der Rohrmotor 101 an einem jeweiligen Ende der beiden gleich langen, vertikalen Führungsstützen 106 und 107 angeordnet ist.

Die Möbelvorrichtung 100 aus Fig. 1 umfasst dabei vertikale Führungsstützen 106 und 107, welche rohrförmig ausgebildet sind.

Ferner umfasst die dargestellte Möbelvorrichtung Führungselemente 104 und 105, die derart rohrförmig ausgebildet sind, um die Führungsstützen 106 und 107 zumindest abschnittsweise zu umschließen.

In der dargestellten Ausführung der Möbelvorrichtung 100 ist das Möbelelement 103 eine Liegefläche.

Erfindungsgemäß ist das Zugelement flächig ausgebildet.

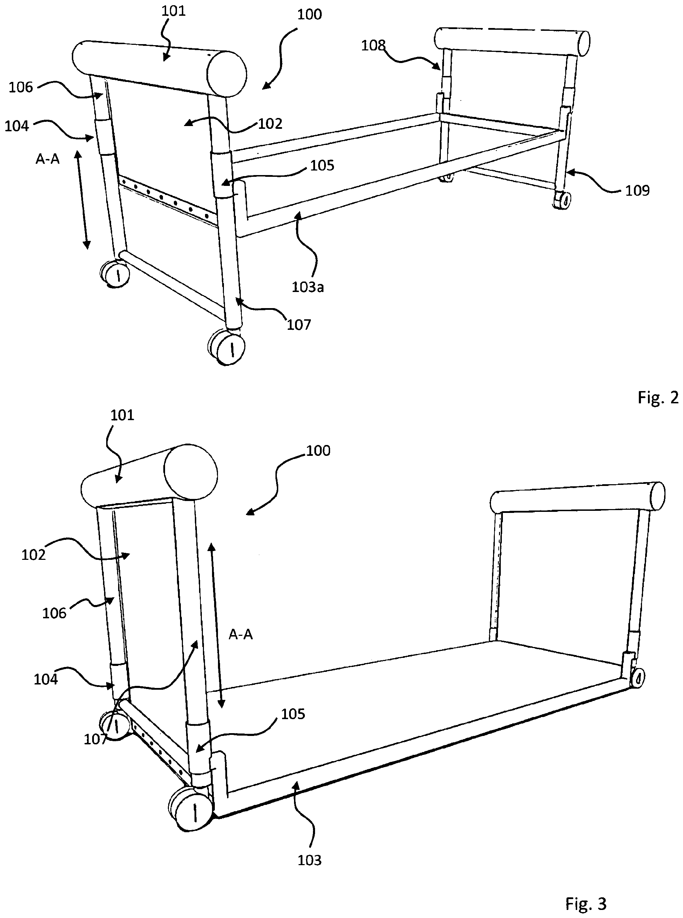

In **Fig. 2** ist eine perspektivische Darstellung einer zweiten Ausführung der Möbelvorrichtung mit einem höhenverstellbaren Möbelelement gezeigt, welches Möbelelement sich in einer angehobenen Position befindet. Die Möbelvorrichtung umfasst einen Rohrmotor 101 und ein an dem Rohrmotor 101 verstellbar angeordnetes Zugelement 102. Dabei umfasst die Möbelvorrichtung 100 ferner ein Möbelelement 103. Durch die Übertragung einer Zugkraft des Rohrmotors 101 auf das Zugelement 102 kann das Möbelelement 103 über einen vorbestimmten Hub A-A bewegt werden.

Ferner umfasst die Möbelvorrichtung vier vertikale Führungsstützen 106, 107, 108 und 109, wobei das Möbelelement ein Rahmen 103a für eine Liegefläche ist. Die vertikalen Führungsstützen 106, 107, 108 und 109 sind rohrförmig ausgebildet.

Das Möbelelement 103a ist an den vertikalen Führungsstützen 106, 107, 108 und 10 verschiebbar angeordnet.

Weiterhin ist der Rohrmotor 101 ist mit zwei vertikalen Führungsstützen 106 und 107 verbunden.

Vorteilhaft ist es, wenn zwei der vertikalen Führungsstützen 106 und 107 gleich lang ausgebildet sind und der Rohrmotor 101 an einem jeweiligen Ende der beiden gleich langen, vertikalen Führungsstützen 106 und 107 angeordnet ist.

Ferner umfasst die dargestellte Möbelvorrichtung Führungselemente 104 und 105, die derart rohrförmig ausgebildet sind, um die Führungsstützen 106 und 107 zumindest abschnittsweise zu umschließen.

Der Rahmen 103a umfasst in dieser Ausführung an zumindest einer Rahmenseite einen weiteren Rohrmotor.

Erfindungsgemäß ist das Zugelement flächig ausgebildet.

In **Fig. 3** ist eine weitere perspektivische Darstellung der zweiten Ausführung der Möbelvorrichtung mit einem höhenverstellbaren Möbelelement gezeigt, welches Möbelelement sich in einer abgesenkten Position befindet. Die Möbelvorrichtung umfasst einen Rohrmotor 101 und ein an dem Rohrmotor 101 verstellbar angeordnetes Zugelement 102. Dabei umfasst die Möbelvorrichtung 100 ferner ein Möbelelement 103. Durch die Übertragung einer Zugkraft des Rohrmotors 101 auf das Zugelement 102 kann das Möbelelement 103 über einen vorbestimmten Hub A-A bewegt werden.

Ferner umfasst die Möbelvorrichtung vier vertikale Führungsstützen 106, 107, 108 und 109, wobei das Möbelelement ein Rahmen 103a für eine Liegefläche ist. Die vertikalen Führungsstützen 106, 107, 108 und 109 sind rohrförmig ausgebildet.

Das Möbelelement 103a ist an den vertikalen Führungsstützen 106, 107, 108 und 10 verschiebbar angeordnet.

Weiterhin ist der Rohrmotor 101 mit zwei vertikalen Führungsstützen 106 und 107 verbunden.

Vorteilhaft ist es, wenn zwei der vertikalen Führungsstützen 106 und 107 gleich lang ausgebildet sind und der Rohrmotor 101 an einem jeweiligen Ende der beiden gleich langen, vertikalen Führungsstützen 106 und 107 angeordnet ist.

Ferner umfasst die dargestellte Möbelvorrichtung Führungselemente 104 und 105, die derart rohrförmig ausgebildet sind, um die Führungsstützen 106 und 107 zumindest abschnittsweise zu umschließen.

Der Rahmen 103a umfasst in dieser Ausführung an zumindest einer Rahmenseite einen weiteren Rohrmotor.

Erfindungsgemäß ist das Zugelement flächig ausgebildet.

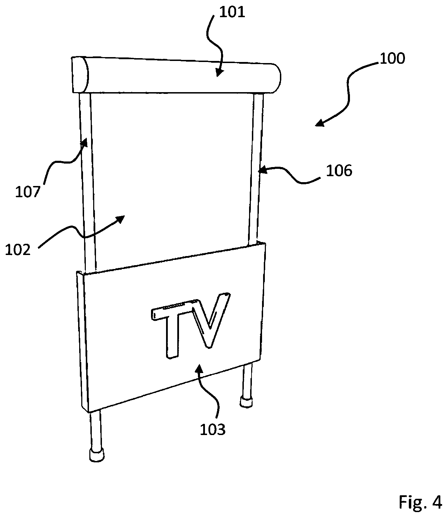

In **Fig. 4** ist eine schematische Darstellung einer nicht erfindungsgemäßen Ausführung der Möbelvorrichtung mit einem höhenverstellbaren Möbelelement gezeigt. Die Möbelvorrichtung umfasst einen Rohrmotor 101 und ein an dem Rohrmotor 101 verstellbar angeordnetes Zugelement 102. Dabei umfasst die Möbelvorrichtung 100 ferner ein Möbelelement 103, welches in der dargestellten Ausführung ein Halter für ein Fernsehgerät ist. Durch die Übertragung einer Zugkraft des Rohrmotors 101 auf das Zugelement 102 kann das Möbelelement 103 über einen vorbestimmten Hub A-A bewegt werden.

Ferner umfasst die Möbelvorrichtung mindestens zwei vertikale Führungsstützen 106 und 107, wobei das Möbelelement 103 an den vertikalen Führungsstützen 106 und 107 verschiebbar angeordnet ist.

Der Rohrmotor 101 ist mit zwei der mindestens zwei vertikalen Führungsstützen 106 und 107 verbunden.

Vorteilhaft ist es, wenn zwei der mindestens zwei vertikalen Führungsstützen 106 und 107 gleich lang ausgebildet sind und der Rohrmotor 101 an einem jeweiligen Ende der beiden gleich langen vertikalen Führungsstützen 106 und 107 angeordnet ist.

Die Möbelvorrichtung 100 aus Fig. 1 umfasst dabei vertikale Führungsstützen 106 und 107, welche rohrförmig ausgebildet sind.

Ferner umfasst die dargestellte Möbelvorrichtung Führungselemente 104 und 105, die derart rohrförmig ausgebildet sind, um die Führungsstützen 106 und 107 zumindest abschnittsweise zu umschließen.

In der dargestellten Ausführung der Möbelvorrichtung 100 ist das Möbelelement 103 eine Liegefläche.

Gemäß einem vorteilhaften Aspekt ist das Zugelement flächig ausgebildet.

## Patentansprüche

1. Möbelvorrichtung (100) mit einem höhenverstellbaren Möbelelement (103), umfassend einen Rohrmotor (101) und ein an dem Rohrmotor (101) verstellbar angeordnetes Zugelement (102), wobei die Möbelvorrichtung (100) ferner ein Möbelelement (103) umfasst, das durch die Übertragung einer Zugkraft des Rohrmotors (101) auf das Zugelement (102) über einen vorbestimmten Hub (A-A) bewegt werden kann, wobei die Möbelvorrichtung ferner mindestens zwei vertikale Führungsstützen (106, 107) umfasst, wobei das Möbelelement (103) an den vertikalen Führungsstützen (106, 107) verschiebbar angeordnet ist, wobei das Möbelelement (103) eine Liegefläche oder eine Sanitäreinrichtung, ein Waschbecken, ein Duschsitz, ein Bidet oder eine Toilette, ist, wobei das Zugelement (102) flächig ausgebildet ist, wobei der Rohrmotor in eine Welle eingeschoben ist und diese antreibt, wobei die Welle wiederum mit dem Zugelement über die gesamte Länge verbunden ist; wobei die vertikalen Führungsstützen (106, 107) rohrförmig ausgebildet sind, ferner umfassend Führungselemente (104, 105), die derart rohrförmig ausgebildet sind, um die Führungsstützen (106, 107) zumindest abschnittsweise zu umschließen.

2. Möbelvorrichtung (100) nach Anspruch 1, wobei das Möbelelement (103) an dem Zugelement (102) relativ zu diesem verschiebbar angeordnet ist.

3. Möbelvorrichtung (100) nach Anspruch 2, wobei der Rohrmotor (101) mit zwei der mindestens zwei vertikalen Führungsstützen (106, 107) verbunden ist.

4. Möbelvorrichtung (100) nach Anspruch 2 oder 3, wobei zwei der mindestens zwei vertikalen Führungsstützen (106, 107) gleich lang ausgebildet sind und der Rohrmotor (101) an einem jeweiligen Ende der beiden gleich langen vertikalen Führungsstützen (106, 107) angeordnet ist.

5. Möbelvorrichtung (100) nach Anspruch 1, mit vier vertikalen Führungsstützen (106, 107, 108, 109), wobei das Möbelelement ein Rahmen (103a) für eine Liegefläche ist.

6. Möbelvorrichtung (100) nach Anspruch 5, wobei der Rahmen (103a) an zumindest einer Rahmenseite einen weiteren Rohrmotor umfasst.

## Claims

1. Furniture device (100) having a height-adjustable furniture element (103), comprising a tubular motor (101) and a traction element (102) adjustably arranged on the tubular motor (101), the furniture device (100) further comprising a furniture element (103) which can be moved over a predetermined stroke (A-A) by the transmission of a tractive force of the tubular motor (101) to the traction element (102), the furniture device further comprising at least two vertical guide supports (106, 107), the furniture element (103) being displaceably arranged on the vertical guide supports (106, 107), wherein the furniture element (103) is a reclining surface or a sanitary installation, a wash basin, a shower seat, a bidet or a toilet, the traction element (102) being of a planar design, the tubular motor being inserted into a shaft and drives the latter, the shaft in turn being connected to the traction element over the entire length; wherein the vertical guide supports (106, 107) are designed tubular in shape, further comprising guide elements (104, 105) which are designed tubular in shape in such a way as to enclose the guide supports (106, 107) at least in sections.

2. Furniture device (100) according to claim 1, wherein the furniture element (103) is arranged on the traction element (102) so as to be displaceable relative thereto.

3. Furniture device (100) according to claim 2, wherein the tubular motor (101) is connected to two of the at least two vertical guide supports (106, 107).

4. Furniture device (100) according to claim 2 or 3, wherein two of the at least two vertical guide supports (106, 107) are formed to be of equal length and the tubular motor (101) is arranged at a respective end of the two vertical guide supports (106, 107) of equal length.

5. Furniture device (100) according to claim 1, comprising four vertical guide supports (106, 107, 108, 109), wherein the furniture element is a frame (103a) for a reclining surface.

6. Furniture device (100) according to claim 5, wherein the frame (103a) comprises a further tubular motor on at least one frame side.

## Revendications

1. Dispositif de meuble (100) avec un élément de meuble réglable en hauteur (103), comprenant un moteur tubulaire (101) et un élément de traction (102) disposé de manière réglable sur le moteur tubulaire (101), le dispositif de meuble (100) comprenant en outre un élément de meuble (103) qui peut être déplacé sur une course prédéterminée (A-A) par la transmission d'une force de traction du moteur tubulaire (101) à l'élément de traction (102), le dispositif de meuble comprenant en outre au moins deux supports de guidage verticaux (106, 107), l'élément de meuble (103) étant disposé de manière déplaçable sur les supports de guidage verticaux (106, 107), l'élément de meuble (103) étant une surface de couchage ou une installation sanitaire, un lavabo, un siège de douche, un bidet ou une toilette, l'élément de traction (102) étant de forme plane, le moteur tubulaire étant inséré dans un arbre et entraîne ce dernier, l'arbre étant à son tour relié à l'élément de traction sur toute la longueur ; dans lequel les supports de guidage verticales (106, 107) sont de forme tubulaire et comprennent en outre des éléments de guidage (104, 105) de forme tubulaire conçus de manière à entourer les supports de guidage (106, 107) au moins en partie.

2. Dispositif de meuble (100) selon la revendication 1, dans lequel l'élément de meuble (103) est disposé sur l'élément de traction (102) de manière à pouvoir être déplacé par rapport à celui-ci.

3. Dispositif de meuble (100) selon la revendication 2, dans lequel le moteur tubulaire (101) est relié à deux des au moins deux supports de guidage verticaux (106, 107).

4. Dispositif de meuble (100) selon la revendication 2 ou 3, dans lequel deux des au moins deux supports de guidage verticaux (106, 107) sont formées pour être de longueur égale et le moteur tubulaire (101) est disposé à une extrémité respective des deux supports de guidage verticaux (106, 107) de longueur égale.

5. Dispositif de meuble (100) selon la revendication 1, comprenant quatre supports de guidage verticaux (106, 107, 108, 109), dans lequel l'élément de meuble est un cadre (103a) pour une surface de couchage.

6. Dispositif de meuble (100) selon la revendication 5, dans lequel le cadre (103a) comprend un autre moteur tubulaire sur au moins un côté du cadre.
